# FASCICULE DE BREVET EUROPEEN

(11) **EP 2 459 472 B1**
(45) Date de publication et mention de la délivrance du brevet: **17.07.2013**
(21) Numéro de dépôt: 10752091.8
(22) Date de dépôt: 23.07.2010
(51) Int. Cl.: B65G 47/51

(54) **TABLE D'ACCUMULATION D'ARTICLES POUR UNE INSTALLATION DE CONVOYAGE**
ARTIKELANHÄUFUNGSTISCH FÜR EINE FÖRDERVORRICHTUNG
ITEM ACCUMULATION TABLE FOR CONVEYING EQUIPMENT

(30) Priorité: 29.07.2009 FR 0955294
(43) Date de publication de la demande: 06.06.2012
(73) Titulaire: Sidel Participations, 76930 Octeville sur Mer (FR)
(72) Inventeur: PETROVIC, Zmaj, F-76930 Octeville-sur-Mer (FR)
(74) Mandataire: Cabinet Plasseraud
(86) Numéro de dépôt international: PCT/FR2010/051565
(87) Numéro de publication internationale: WO 2011/012802

(56) Documents cités:
- EP-A1- 1 390 282
- WO-A1-02/32797

## Description

La présente invention se rapporte à une table d'accumulation d'articles, tels que par exemple des récipients du type flacon ou bouteille, et en particulier une table qui est incorporée à une installation de convoyage.

Dans les lignes de production ou de conditionnement de récipients ou d'articles divers, il existe un besoin de convoyer lesdits récipients ou articles d'un poste à un autre ou d'une machine à une autre (machine du type soutireuse, étiqueteuse...).

Il est parfois nécessaire d'accumuler ces articles entre deux postes, de façon à permettre un arrêt de maintenance d'un poste, par exemple, ou à permettre un changement de vitesse de convoyage.

Des tables d'accumulation ont ainsi été réalisées, comme par exemple celle qui est décrite dans la demande EP 1 390 282.

Une telle table comprend deux convoyeurs plans rectilignes juxtaposés, se déplaçant en sens opposés, ainsi que des moyens déflecteurs qui s'étendent au moins partiellement sur chacun des deux convoyeurs pour faire passer les articles d'un convoyeur à l'autre.

Le document EP 1 390 282 prévoit des moyens pour déplacer les moyens déflecteurs, de façon à augmenter la capacité d'accumulation de la table ou, au contraire, de façon à réduire cette capacité d'accumulation.

Par ailleurs, les moyens déflecteurs constituent un guide pour le flux de bouteilles et ils délimitent, sur la table d'accumulation, une zone de transit entre l'entrée et la sortie de ladite table qui offre une capacité de stockage temporaire des articles.

Cette zone de transit a une surface qui varie en fonction du déplacement des moyens déflecteurs, et toute la surface de cette zone de transit et de stockage temporaire est occupée par le flux d'articles, et en particulier par un flux compact.

En effet, le débit d'articles entrant sur la table d'accumulation correspond au débit sortant de ladite table, si bien qu'il n'existe pas d'espaces libres pour introduire d'autres articles qui peuvent, tout simplement, être, par exemple, des bouteilles récupérées ou autres.

Pour réaliser l'accumulation d'articles, il existe d'autres types d'accumulateurs qui sont aussi constitués de deux convoyeurs évoluant parallèlement et en sens inverses. Toutefois ces deux convoyeurs sont hélicoïdaux (et s'enroulent en suivant un dessin de spirale) et un chariot, guidé entre ces deux convoyeurs, porte un organe déflecteur pour réaliser le transfert des produits d'un convoyeur à l'autre.

Le document WO 02/32797 décrit une table selon le préambule de la revendication 1.

Ce genre d'appareil, comme décrit dans les documents US 6 152 291, WO2001/09015 et WO2001/98184, comporte des convoyeurs qui sont généralement disposés dans une cage de protection, pour des questions de sécurité. De plus, le chariot-déflecteur se déplace depuis le niveau du sol jusqu'à des hauteurs parfois importantes, en suivant le chemin spiralé qui est établi par les deux convoyeurs. La cage de protection et, surtout, la conception et le fonctionnement de ce type d'appareils, ne permettent pas d'envisager une introduction particulière d'articles, pour du recyclage ou autre, sur le convoyeur de sortie.

Pour contrôler le taux de remplissage de la table, il est connu de EP 1 390 282 de faire varier les vitesses d'avancement de chacun des convoyeurs, par exemple en contrôlant au moyen de capteurs le nombre d'articles entrant sur la table par le convoyeur d'entrée et le nombre d'articles sortant de la table par le convoyeur de sortie.

Comme le décrit EP 1 390 282, l'organe déflecteur est déplacé sur la table en fonction des vitesses d'avancement de chacun des convoyeurs.

L'invention propose une alternative aux moyens conventionnels de commande du déplacement de l'organe déflecteur.

L'invention concerne, à cet effet, une table plane d'accumulation d'articles pour une installation de convoyage du type comprenant, installés sur un bâti :
- deux convoyeurs plans parallèles qui sont placés côte à côte et qui sont animés dans des sens opposés pour faire circuler longitudinalement lesdits articles, l'un des convoyeurs constituant un convoyeur d'entrée des articles et l'autre convoyeur constituant un convoyeur de sortie des articles, l'un et l'autre de ces convoyeurs constituant, en fonction des besoins, une zone de transit et d'accumulation desdits articles dont la surface d'accueil est variable,
- un organe déflecteur qui est mobile longitudinalement et qui transfère lesdits articles disposés sur ledit convoyeur d'entrée vers ledit convoyeur de sortie.

La table selon l'invention est remarquable en ce que l'organe déflecteur se présente sous la forme d'une paroi courbe qui s'étend sensiblement sur toute la largeur du convoyeur d'entrée, entre une glissière latérale servant de guide pour les articles disposés sur ledit convoyeur d'entrée, et une structure disposée entre lesdits deux convoyeurs, laquelle paroi est portée par un chariot qui est solidaire de ladite structure, laquelle structure est mobile longitudinalement. La table selon l'invention est également remarquable en ce qu'elle comporte une zone d'introduction d'articles sur ledit convoyeur de sortie, ladite zone d'introduction étant disposée hors de ladite zone de transit, sur la surface du convoyeur qui se situe au-delà dudit organe déflecteur.

La table de l'invention comporte un système de commande du déplacement de l'organe déflecteur, ledit système comportant :
- des moyens de détection de la présence ou de l'absence d'articles en place au voisinage d'une zone surveillée qui se situe à l'extrémité aval de l'organe déflecteur, sur le convoyeur de sortie, et
- des moyens d'analyse d'informations sur le taux d'occupation de ladite zone, lesquelles informations sont fournies par lesdits moyens de détection aux moyens d'analyse, lesdits moyens d'analyse étant associés à un calculateur qui commande les moyens de déplacement de l'organe déflecteur, pour modifier la position dudit organe déflecteur dans l'une desdites directions ou dans l'autre, selon le taux d'occupation de ladite zone surveillée et suivant que les moyens de détection atteignent ou dépassent une première ou une seconde position, lesdites première et seconde positions étant situées de part et d'autre d'une position de référence et étant comprises dans ladite zone surveillée.

L'invention peut également comporter les caractéristiques suivantes, prises séparément ou en combinaison :
- la table peut comporter une cloison de séparation qui s'étend entre les deux convoyeurs et qui laisse un passage de longueur constante, en amont de l'extrémité de la paroi pour le transfert des articles du convoyeur d'entrée vers le convoyeur de sortie ;
- le passage peut présenter une longueur qui est comprise sensiblement entre une fois et une fois et demie la largeur du convoyeur d'entrée ;
- la structure peut se présenter sous la forme d'une chaîne sans fin motorisée et elle peut être aménagée, notamment au niveau du passage, pour faire office de tapis intermédiaire entre les deux convoyeurs, sur une longueur qui correspond au moins à la longueur dudit passage ;
- la cloison de séparation peut être constituée de pièces élémentaires qui sont portées par le tapis, lesquelles pièces élémentaires s'étendent sur une longueur qui correspond à la zone de transit ;
- le chariot peut comprendre :
   - un côté latéral guidé sur la glissière du convoyeur d'entrée,
   - un côté transversal qui s'étend sensiblement perpendiculairement à ladite glissière jusqu'à ladite structure sur laquelle il est fixé,
   - une paroi courbe qui présente une extrémité amont tangente à ladite glissière et une extrémité aval qui fait un angle avec ledit côté transversal au moins supérieur ou égal à 10° ;
- le côté latéral du chariot peut comporter :
   - une extrémité amont constituée d'une pièce monobloc en forme de coulisseau à section en C qui coulisse sur la glissière, ladite extrémité amont servant de départ pour la paroi courbe, et
   - des galets répartis sur le côté latéral, lesquels galets sont disposés de façon à rouler de part et d'autre de la glissière.
- la glissière peut comprendre une âme métallique solidaire du bâti et un profilé en matériau thermoplastique, lequel profilé couvre totalement ladite âme du côté du convoyeur et partiellement de l'autre côté.
- la table peut comporter un second organe déflecteur apte à diriger les articles qui sont positionnés sur le convoyeur de sortie vers un autre convoyeur.
- le déflecteur peut comporter, à son extrémité amont, un volet incliné, disposé à un niveau qui s'étend au-dessus de la cloison, ledit volet étant apte à ramener les articles vers le convoyeur de sortie, lors de la vidange de ladite table d'accumulation.

Conformément à l'invention, la table équipée d'un tel système de commande peut également comporter les caractéristiques suivantes, prises séparément ou en combinaison :
- les moyens de détection peuvent être mobiles entre deux positions extrêmes délimitant ladite zone surveillée, sous l'action d'une pression ou d'une absence de pression exercée par les articles passant du convoyeur d'entrée vers le convoyeur de sortie ;
- les moyens de détection peuvent comprendre un palpeur réalisé par un bras articulé sur l'organe déflecteur, ledit palpeur étant positionné de manière à être en contact avec les articles convoyés et à être mobile sous la pression desdits articles convoyés passant du convoyeur d'entrée au convoyeur de sortie, dans la zone surveillée ;
- la table peut comporter :
   - un premier capteur déterminant la position de l'organe déflecteur sur la table,
   - un second capteur déterminant la position dudit palpeur sur la table,
   - et un calculateur relié aux premier et second capteurs de positions, ledit calculateur étant apte à comparer des données fournies par lesdits premier et second capteurs pour commander les moyens de déplacement de l'organe déflecteur.
- le capteur de position dudit palpeur peut être un télémètre et le palpeur peut porter un réflecteur.
- les moyens de détection peuvent comporter des moyens de rappel élastique du bras dans une première position de détection.

L'invention prévoit également un procédé permettant la mise en oeuvre du système de commande de la table, comprenant les étapes suivantes :
- transmission, par le premier capteur de position au calculateur, d'une première information concernant la position de l'organe déflecteur sur la table,
- transmission, par le second capteur de position au calculateur, d'une seconde information concernant la position du palpeur sur la table,
- comparaison, par le calculateur, desdites première et seconde informations, de manière à obtenir un résultat,
- analyse dudit résultat, et
- transmission, par le calculateur aux moyens de déplacement de l'organe déflecteur, d'un ordre de déplacement dudit organe déflecteur dans une direction ou dans une autre, si le résultat indique que le palpeur a atteint l'une ou l'autre desdites positions de déclenchement d'un côté ou de l'autre de ladite position de référence.

Le système de commande défini ci-dessus pourrait être mis en oeuvre sur toute table comprenant :
- deux convoyeurs plans rectilignes parallèles qui sont placés côte à côte et qui sont animés dans des sens opposés pour faire circuler longitudinalement lesdits articles, l'un des convoyeurs constituant un convoyeur d'entrée des articles et l'autre convoyeur constituant un convoyeur de sortie des articles, l'un et l'autre de ces convoyeurs constituant, en fonction des besoins, une zone de transit et d'accumulation desdits articles dont la surface d'accueil est variable, et
- un organe déflecteur qui est mobile longitudinalement suivant deux directions opposées sous l'action de moyens de déplacement, et assurant le transfert desdits articles disposés sur ledit convoyeur d'entrée vers ledit convoyeur de sortie. L'invention porte également sur le procédé de mise en oeuvre du système de commande de la table, tel que décrit dans la revendication 16.

L'invention sera davantage comprise à la lumière du mode de réalisation qui va maintenant être présenté, en faisant référence aux figures annexées parmi lesquelles :
- la figure 1 est une représentation schématique en perspective d'une table d'accumulation conforme à l'invention,
- la figure 2 montre l'extrémité du chariot, en vue de dessus, laquelle extrémité est signalée par la référence A sur la figure 1,
- la figure 3 est une vue en coupe de la figure 2 selon l'axe III-III,
- la figure 4 est une vue en perspective de l'extrémité du chariot, repérée par la référence A sur la figure 1, sans carter d'habillage,
- la figure 5 montre le détail d'une partie de la table, laquelle partie est repérée par la référence B sur la figure 1,
- la figure 6 est une représentation schématique en perspective d'une table d'accumulation conforme à l'invention, équipée d'un système de commande des moyens de déplacement de l'organe déflecteur, et
- la figure 7 est une vue de dessus schématique de la table de la figure 6, montrant plus en détails les éléments que comporte le système de commande.

On décrira dans un premier temps un mode de réalisation d'une table plane d'accumulation conforme à l'invention et, dans un second temps, le mode de fonctionnement d'une telle table.

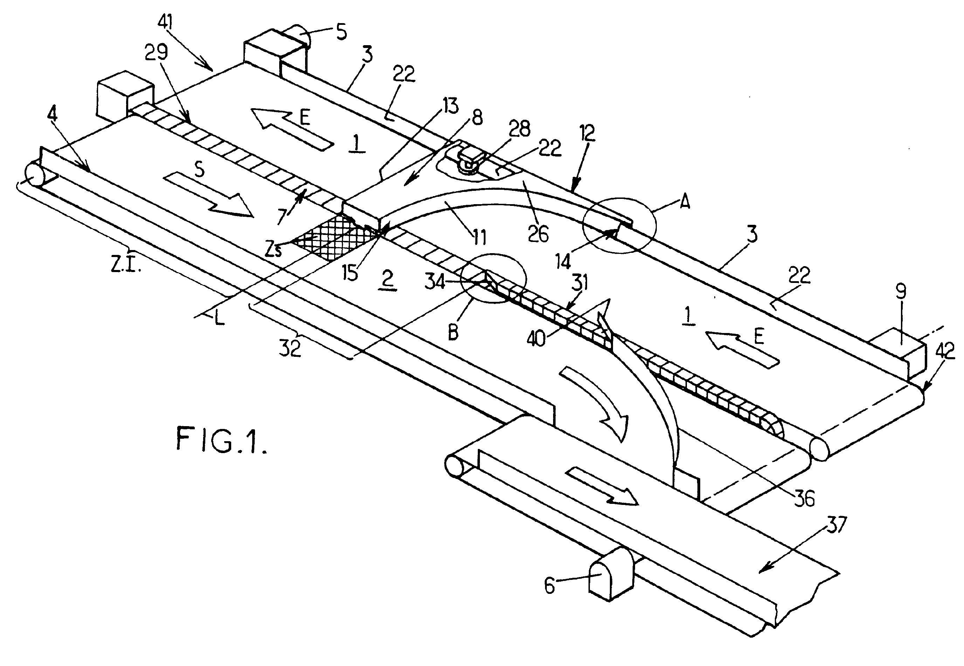

Une table plane d'accumulation conforme à l'invention est montrée en figure 1.

Une telle table plane est réalisée pour être disposée entre deux machines de traitement, par exemple une machine de remplissage des bouteilles et une machine de conditionnement des bouteilles (une fois ces dernières remplies) ; elle est intégrée à l'installation de convoyage qui s'étend entre les deux machines, dans un même plan horizontal.

La table plane d'accumulation comporte deux convoyeurs 1 et 2 rectilignes qui sont plans et qui sont disposés côte à côte, parallèles l'un par rapport à l'autre.

Chacun des convoyeurs 1 et 2 comporte une surface de convoyage constituée d'un seul ou de plusieurs tapis sans fin juxtaposés.

La largeur du convoyeur 1 est supérieure à celle du convoyeur 2.

A titre d'exemple, le convoyeur 1 comporte dix tapis sans fin juxtaposés alors que le convoyeur 2 comporte huit tapis sans fin juxtaposés. Pour simplifier la lecture des figures, les multiples tapis n'ont pas été représentés.

Cet aménagement implique aussi une gestion des vitesses de chaque convoyeur pour respecter des consignes de débits à l'entrée et à la sortie de la table d'accumulation, lesquels débits étant identiques à l'entrée et à la sortie de ladite table en dehors des périodes de trouble au niveau de la sortie.

Les tapis des convoyeurs 1 et 2 permettent de porter et de déplacer des bouteilles entre des glissières 3 et 4 latérales. Ainsi, la glissière 3 est placée sur le rebord du convoyeur 1 et la glissière 4 sur le rebord du convoyeur 2.

Le convoyeur 1 est animé dans un sens d'avancement au moyen d'un moteur 5 ; il constitue le convoyeur d'entrée de la table, car il amène les articles sur la table.

Le convoyeur 2 constitue le convoyeur de sortie pour les articles, car il évacue les articles de la table d'accumulation vers une machine de conditionnement des articles, par exemple.

Le convoyeur 2 est entraîné en mouvement dans un sens opposé au sens du mouvement du convoyeur 1.

Le mouvement du tapis du convoyeur 2 est animé grâce à un moteur 6.

Dans la description qui va suivre, on prendra pour exemple le convoyage de bouteilles. Il devra toutefois être compris que cette application n'est nullement limitative et que la table conforme à l'invention s'applique à l'accumulation d'autres types d'articles.

On considère que les bouteilles sont convoyées longitudinalement sur la table d'accumulation par les convoyeurs 1 et 2, c'est-à-dire suivant la direction de la longueur de la table.

Les convoyeurs 1 et 2 peuvent constituer chacun une zone de transit des bouteilles. En effet, on considère que les bouteilles arrivant sur la table d'accumulation sont placées momentanément sur les tapis des convoyeurs 1 et 2 avant d'être évacuées de ladite table.

Pour assurer le passage des bouteilles du convoyeur 1 d'entrée vers le convoyeur 2 de sortie, la table comprend un organe déflecteur porté par un chariot 8 qui est monté mobile longitudinalement sur la table d'accumulation.

Ce chariot 8 est mobile grâce à une structure 7 qui est disposée entre les deux convoyeurs 1 et 2, et il est guidé par la glissière 3 située sur le rebord du convoyeur 1. Le chariot 8 est solidaire de la structure 7 qui est manoeuvrée par l'intermédiaire d'un organe moteur 9.

Le déplacement du chariot 8 sur la table d'accumulation permet d'augmenter ou de réduire la surface de la zone de transit des bouteilles, c'est-à-dire la zone dans laquelle les bouteilles sont placées momentanément sur ladite table d'accumulation avant d'être évacuées ; cette zone de transit s'étale sur une surface d'accueil qui est constituée par au moins une partie du convoyeur 1 d'entrée et/ou du convoyeur 2 de sortie.

Le chariot 8 se présente sensiblement sous la forme d'un triangle rectangle et il comporte une paroi 11 qui est courbe pour guider les bouteilles disposées sur le convoyeur 1 d'entrée vers le convoyeur 2 de sortie.

Cette paroi 11 fait office d'organe déflecteur et elle s'étend uniquement sur toute la largeur du convoyeur d'entrée 1 entre la glissière 3 latérale du convoyeur 1 d'entrée et la structure 7 mobile, laissant totalement libre la surface du convoyeur 2.

Le chariot 8 s'étend lui aussi sur toute la largeur du convoyeur 1 pour laisser libre la partie du convoyeur 2 qui se situe au droit et en amont dudit chariot 8 afin de permettre l'introduction des bouteilles, manuellement ou mécaniquement, sur cette partie libre.

La table selon l'invention comporte ainsi toujours une zone d'introduction qui se trouve sur le convoyeur 2, en amont d'une limite qui se trouve sensiblement en regard du chariot 8.

Cette limite est concrètement définie, sur le convoyeur 2, par une ligne qui correspond au front de bouteilles, laquelle ligne est notamment visible lors du fonctionnement de la table d'accumulation, lorsque des bouteilles passent du convoyeur 1 au convoyeur 2.

On peut toutefois considérer que cette ligne puisse être repérée par la référence L, (voir figure 1), quand la table n'est pas en fonctionnement ; cette ligne L étant abstraite et transversale par rapport au convoyeur 2 ; elle est située au droit de l'extrémité du chariot 8 qui est fixé sur la structure 7.

La zone d'introduction est repérée par la référence ZI sur la figure 1 et c'est la position du chariot 8 sur la table d'accumulation qui définit l'étendue de la surface disponible sur cette zone ZI d'introduction.

Le chariot 8 comporte également un côté 12 latéral qui est guidé sur la glissière 3 du convoyeur 1, comme il sera décrit plus en détail par la suite, et un côté 13 transversal qui s'étend sensiblement perpendiculairement à ladite glissière 3, entre cette dernière et la structure 7 centrale mobile.

La paroi 11 courbe du chariot 8 présente une extrémité 14 amont qui est tangente à la glissière 3 et une extrémité 15 aval qui se termine au niveau de la structure 7 mobile.

A l'extrémité 15 aval de la paroi 11 courbe, l'angle entre la tangente à cette paroi 11 courbe et le côté 13 transversal est au moins supérieur ou égal à 10°.

Le chariot 8 est monté mobile sur la glissière 3 comme il va maintenant être expliqué en faisant référence aux figures 1 à 4.

Tout d'abord, le chariot 8 comporte une pièce qui est montée coulissante sur la glissière 3. Cette pièce constitue un coulisseau 16 qui est fixé sur le chariot 8, en particulier à l'extrémité 14 amont de la paroi 11 courbe, l'extrémité 14 amont de la paroi 11 courbe constituant également l'extrémité amont du côté 12 latéral.

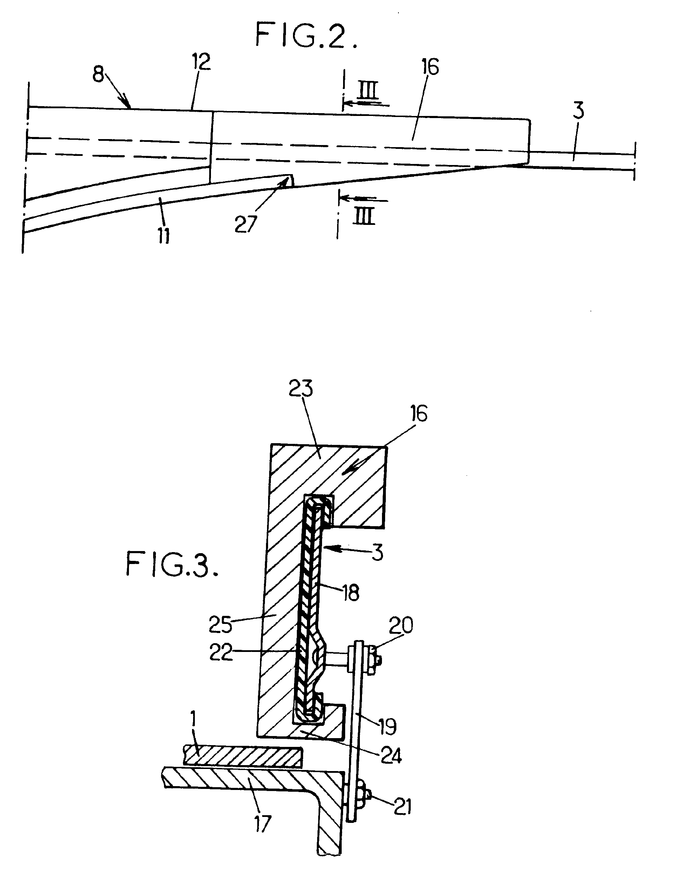

Comme on peut le voir en particulier sur la figure 3, la glissière 3 est fixée sur le bâti 17 de la table. Pour ce faire, la glissière 3 comporte une âme 18 métallique fixée à une patte 19 au moyen d'un boulon 20, laquelle patte 19 est elle-même fixée au bâti 17 par un boulon 21.

La glissière 3 comporte également un profilé 22 en matériau thermoplastique qui est enfilé sur l'âme 18. Ce profilé 22 couvre totalement l'âme 18 sur l'un de ses côtés et en particulier le côté qui est dirigé vers le convoyeur 1 d'entrée ; le côté extérieur de l'âme 18 est simplement recouvert en haut et en bas par les extrémités dudit profilé 22 qui sont repliées en forme de crochets.

Le coulisseau 16 est une pièce dont la section transversale présente une forme sensiblement en C, comprenant deux branches latérales 23 et 24 reliées par un fond 25.

Les extrémités libres des branches 23 et 24 latérales sont recourbées vers l'intérieur du C, de sorte que le coulisseau 16 épouse le contour de la glissière 3 qui fait office de rail de guidage pour le chariot 8.

Le coulisseau 16 est réalisé dans un matériau thermoplastique dont le coefficient de frottement est faible.

Le bord d'attaque du coulisseau 16 est en retrait par rapport à la surface de contact des bouteilles sur la glissière 3 de façon à ne pas former une aspérité et, au contraire, de façon à prendre en charge les bouteilles en douceur, tangentiellement, pour les faire changer de direction.

Le coulisseau 16 présente également des moyens pour être fixé sur la structure constitutive du chariot 8 qui, sur la figure 1, est habillée par un carter 26 de protection, apte à enfermer tous les éléments de guidage dudit chariot 8.

Le coulisseau 16 comporte également un décrochement 27 apte à recevoir l'extrémité de la paroi 11, de sorte que l'extrémité de cette paroi 11 présente une surface dans la continuité de la surface du coulisseau 16.

Pour assurer un guidage du chariot 8 le long de la glissière 3, on prévoit des moyens de roulement répartis le long du côté 12 latéral du chariot 8, de préférence de part et d'autre de la glissière 3.

De tels moyens de roulement peuvent, par exemple, être constitués de plusieurs galets répartis sur le côté 12 du chariot 8. Ces galets sont aptes à rouler, pour les uns, sur le profilé 22 de la glissière 3 et, pour les autres, à l'extérieur de ladite glissière, sur l'âme 18.

La figure 1 montre un galet 28 apte à rouler sur le profilé 22. Le (ou les) galet(s) apte(s) à rouler sur l'âme 18 n'ont volontairement pas été représentés pour simplifier la lecture de la figure 1.

Comme il a été indiqué précédemment, le chariot 8 est fixé sur la structure 7 au voisinage de son extrémité 15 aval, c'est-à-dire au niveau de l'extrémité de la paroi 11 courbe.

Cette fixation est, par exemple, réalisée au moyen de vis ou de boulons, ou de tout autre moyen estimé approprié par l'homme du métier.

La structure 7 assure l'entraînement longitudinal du chariot 8 ; elle est constituée d'une sorte de chaîne sans fin et, de préférence, d'un tapis 29 du même type que ceux qui constituent les convoyeurs 1 et 2. Ce tapis 29 sans fin comporte des maillons 30 et il est entraîné, de manière classique en soi, par un arbre relié au moteur 9.

Les maillons 30 du tapis 29 fin présentent une surface qui se confond avec le niveau de la surface des tapis des convoyeurs 1 et 2, de façon à faire office de sole de glissement entre ces deux convoyeurs et à assurer un passage en douceur des bouteilles de l'un vers l'autre.

Comme le montre la figure 1, le tapis 29 s'étend devant le chariot 8, entre les convoyeurs 1 et 2.

Dans la zone de transit, le tapis 29 porte une cloison 31 qui s'étend sur une longueur sensiblement égale à la longueur des convoyeurs 1 et 2, excepté sur une zone dont la longueur est sensiblement égale à la longueur du côté 12 latéral du chariot 8.

La cloison 31 présente une extrémité qui se trouve en regard de l'extrémité 15 aval de la paroi 11 courbe, de manière à laisser un passage 32 en amont de l'extrémité de ladite paroi 11, pour le transfert des bouteilles du convoyeur 1 vers le convoyeur 2.

La cloison 31 et le chariot 8 étant tous deux fixés sur le tapis 29, il en résulte que la longueur du passage 32 reste constante lors du déplacement dudit tapis 29.

On prévoit que la longueur du passage 32 soit sensiblement comprise entre une fois et une fois et demie la largeur du convoyeur 1 d'entrée.

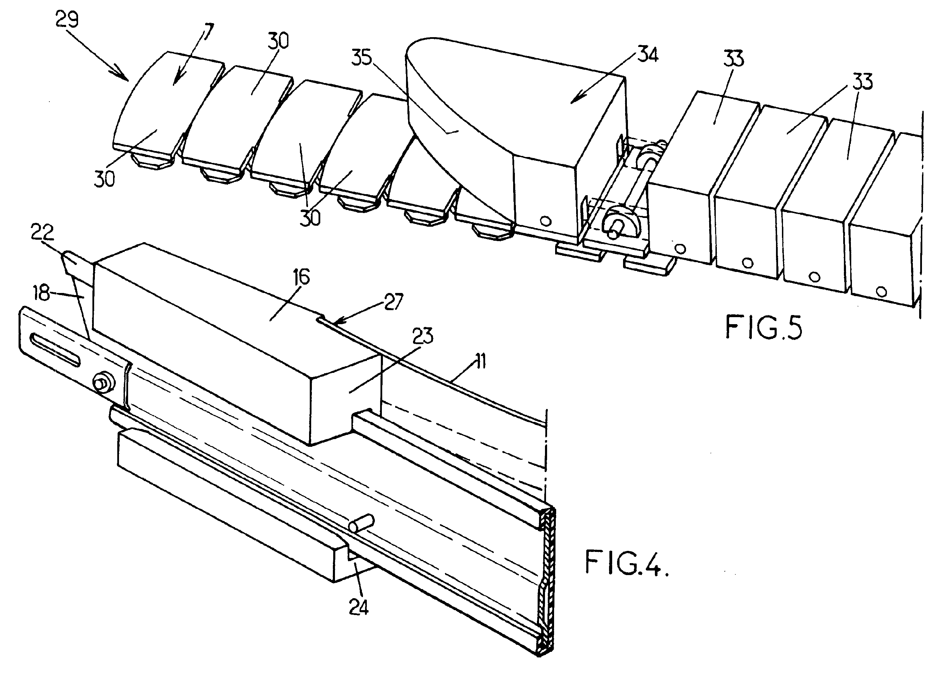

Pour permettre à la cloison 31 de suivre le mouvement du tapis 29, notamment au voisinage d'un arbre d'entraînement qui force les maillons 30 à épouser une forme courbe, on prévoit que la cloison 31 soit formée, au moins partiellement, d'une succession de pièces 33 élémentaires identiques qui permettent l'inscription en courbe de cette cloison 31. Ces pièces 33 élémentaires sont solidaires des maillons 30 qui constituent le tapis 29, comme le montre la figure 5, et elles forment la cloison 31 qui s'étend sur la longueur de la zone de transit.

Cela permet de faire passer la cloison 31 au moins partiellement sous la table d'accumulation quand son extrémité se trouve au voisinage de l'entrée de ladite table ; cette entrée est repérée sur la figure 1 par la référence 42.

L'extrémité 34 de la cloison 31, qui se trouve en regard de l'extrémité aval de la paroi 11 du chariot 8 déflecteur, est constituée d'une pièce dont la forme rappelle celle d'un coin désaxé, lequel coin présente un pan 35 incliné en regard du second convoyeur 2 de sortie.

La fonction de ce pan 35 incliné sera décrite par la suite.

La table d'accumulation illustrée en figure 1 comporte enfin un second organe déflecteur 36 qui est disposé au voisinage de la sortie de ladite table, c'est-à-dire à l'extrémité aval du convoyeur 2, là où les bouteilles sont évacuées.

Ce déflecteur 36 est monté fixe sur le bâti 17 de la table par tout moyen connu approprié, à la portée de l'homme du métier, et il assure le guidage des bouteilles, qui se trouvent sur le convoyeur 2 de sortie, vers un autre convoyeur 37 plan, extérieur à la table d'accumulation, comme par exemple un convoyeur 37 qui alimente une machine de conditionnement de bouteilles.

Le déflecteur 36 s'étend sur toute la largeur du convoyeur 2, de la structure 7 centrale jusqu'à l'entrée du convoyeur 37.

Le déflecteur 36 est avantageusement réalisé à partir d'une tôle courbe dont le rayon de courbure est tel qu'il favorise un bon écoulement des bouteilles, c'est-à-dire un écoulement des bouteilles tel qu'elles ne s'entrechoquent pas trop et qu'elles ne se renversent pas lorsqu'elles arrivent sur le convoyeur 37.

L'extrémité amont du déflecteur 36 se présente sous la forme d'un volet 40 incliné faisant lui aussi office de déflecteur, lequel volet 40 est positionné à un niveau qui se situe au-dessus de celui de la cloison 31.

Ce volet 40 est orienté suivant une direction sensiblement parallèle à celle du pan 35 incliné de la pièce 34 qui est située à l'extrémité de la cloison 31.

Ce volet 40, tout comme le pan 35 incliné de la cloison 31, sert à ramener vers le convoyeur 2 de sortie les bouteilles stagnant sur le tapis 29 de la structure 7 lorsqu'elles sont poussées par le chariot 8 vers la sortie de la table d'accumulation, et en particulier vers le convoyeur 2 et le déflecteur 36.

Un mode de fonctionnement d'une telle table va maintenant être décrit.

Dans un premier temps, le chariot 8 est positionné au plus près de l'entrée de la table, de telle manière que le volet 40 se trouve sensiblement au droit du pan 35 incliné de la cloison 31. Dans cette position, la surface de transit de la table d'accumulation est minimale.

Les bouteilles arrivent sur le convoyeur 1 d'entrée dans le sens de la flèche E, comme il est indique sur la figure 1.

Quand les bouteilles qui sont posées sur le convoyeur 1 atteignent la paroi 11 du chariot 8, elles se déplacent transversalement vers le convoyeur 2 qui les transfère sur le convoyeur 37.

Les bouteilles passent du convoyeur 1 d'entrée au convoyeur 2 de sortie en traversant le passage 32 qui s'étend entre l'extrémité 15 aval de la paroi 11 et l'extrémité 34 de la cloison 31 séparatrice.

Les bouteilles sont alors convoyées par le convoyeur 2 de sortie dans le sens de la flèche S sur la figure 1, vers le déflecteur 36. Le convoyeur 2 de sortie se remplit alors de bouteilles, et il constitue à son tour une zone de transit des bouteilles.

Le chariot 8 est entraîné en déplacement longitudinal à une vitesse de l'ordre de la moitié de la vitesse du tapis du convoyeur 1 lorsque le convoyeur 2 est saturé ou arrêté et que la table d'accumulation doit servir de tampon en stockant les bouteilles.

Quand le chariot 8 arrive en fin de course, c'est-à-dire au voisinage de l'extrémité 41 de la table, à l'opposé de l'extrémité de l'entrée 42 des bouteilles, la table d'accumulation est pleine : le convoyeur 1 est plein ainsi que le convoyeur 2.

Pendant cette étape de remplissage des convoyeurs 1 et 2, d'autres bouteilles peuvent être introduites manuellement ou mécaniquement dans la zone ZI d'introduction du convoyeur 2, telle que définie précédemment, hors de la zone de transit et d'accumulation.

Lors de la vidange de la table d'accumulation, les bouteilles qui reposent sur le tapis 29, dans le passage 32, sont évacuées par le mouvement dudit tapis 29 et du chariot 8, en conjugaison avec le volet 40 qui les transfère vers le convoyeur 2.

Si les bouteilles sont repoussées vers la cloison 31, elles sont redirigées vers le convoyeur 2, grâce au pan 35 incliné de la cloison 31, ou grâce à l'action combinée du pan incliné 35 et du volet 40, dans le cas où le chariot 8 se trouve positionné de telle manière que le pan 35 incliné vienne au droit du volet 40.

Les bouteilles qui arrivent sur le déflecteur 36, entraînées par le convoyeur 2, sont alors dirigées vers le convoyeur 37 externe.

On peut d'ailleurs prévoir des moyens techniques pour que le chariot 8 ne puisse pas être placé totalement à l'extrémité 41 de la table d'accumulation, mais légèrement en amont de cette extrémité, de sorte que la zone ZI d'introduction présente toujours un minimum de surface pour permettre une introduction de bouteilles à n'importe quel moment.

On comprend de la description qui précède comment l'invention permet de disposer d'une zone de transit et d'une zone d'introduction de bouteilles sur la table.

Il devra toutefois être entendu que le mode de réalisation et le fonctionnement qui viennent d'être décrits ne sont pas limitatifs et que la table pourrait fonctionner de façon différente sans sortir du cadre de l'invention.

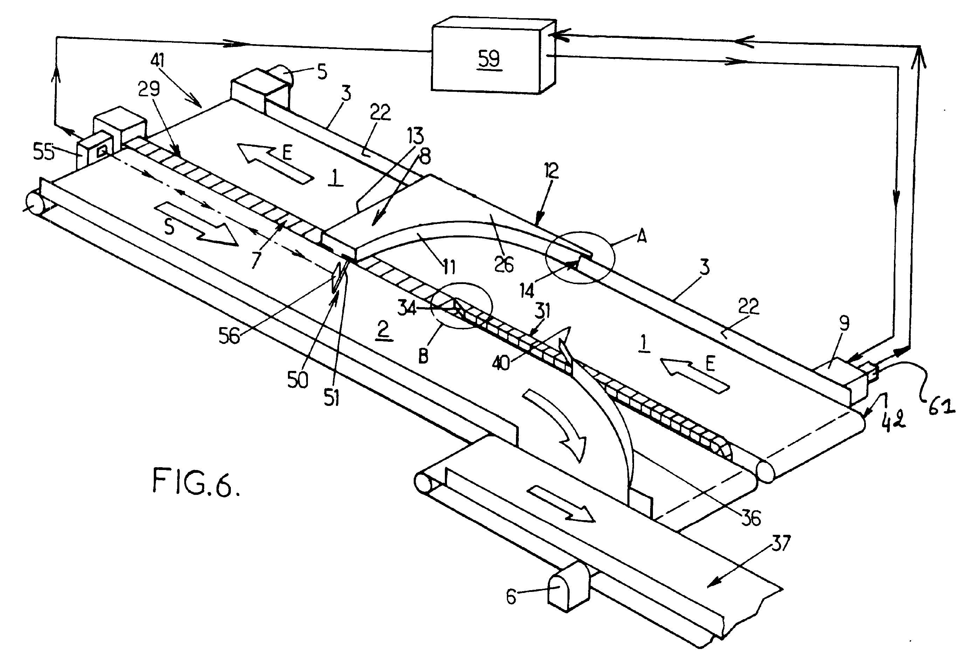

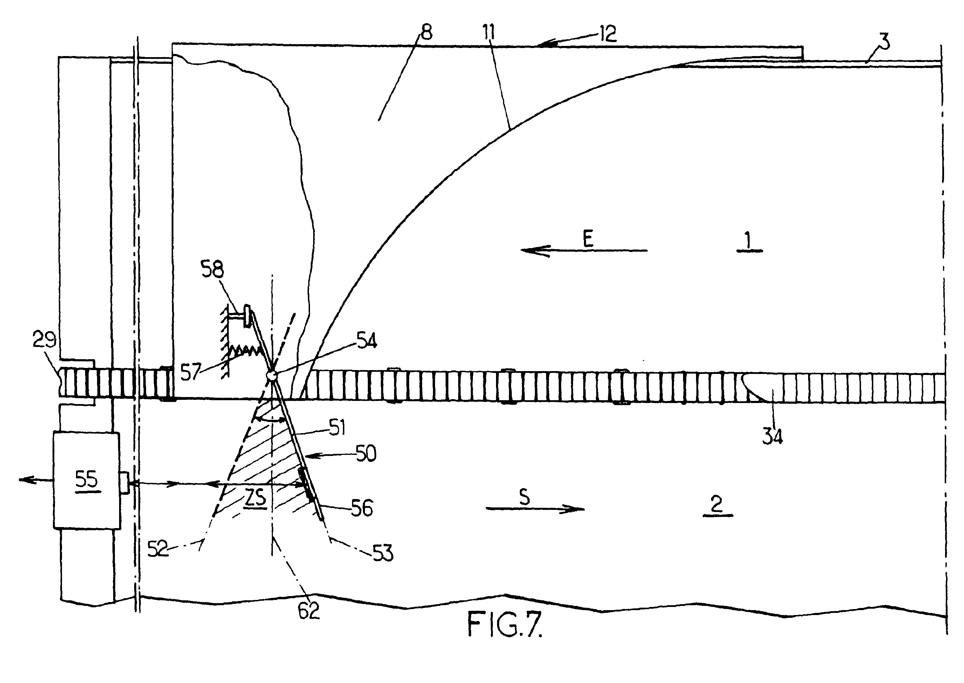

Par exemple, une autre table conforme à l'invention va maintenant être décrite en faisant référence aux figures 6 et 7, ladite table étant équipée d'un système de commande des moyens de déplacement de l'organe déflecteur.

Il est rappelé que lesdits moyens de déplacement sont constitués par un moteur 9 qui entraîne le tapis sans fin 29 sur lequel sont fixés divers éléments, dont le chariot 8, le chariot 8 portant l'organe déflecteur 11.

La table illustrée sur la figure 6 comprend tous les éléments de celle décrite et illustrée sur les figures 1 à 5. Aussi, les références pour les éléments communs ont été gardées.

Le système de commande qui va maintenant être décrit réagit au taux d'occupation d'une zone, dite zone contrôlée ou « surveillée » ZS, qui est définie sur le convoyeur 2 de sortie.

Cette zone ZS est illustrée schématiquement sur les figures 1 et 7 par une zone hachurée.

La zone surveillée ZS se situe à l'extrémité 15 aval de l'organe 11 déflecteur, sur le convoyeur 2 de sortie.

Pour contrôler le taux d'occupation en articles de cette zone ZS surveillée, les moyens de commande comportent des moyens 50 de détection de la présence ou de l'absence d'articles.

Ces moyens de détection 50 sont réalisés par un bras 51 monté articulé sur le chariot 8, mobile entre deux positions 52 et 53 qui délimitent la zone surveillée ZS.

Comme illustré en figure 7, le bras 51 est monté pivotant autour d'un axe 54 vertical, situé sur le chariot 8, à proximité de son extrémité aval. Ainsi, la zone de surveillance ZS présente une forme de secteur angulaire.

Il devra toutefois être compris que l'invention n'est pas limitée à la surveillance d'une zone présentant cette forme, et qu'elle pourrait permettre de surveiller une zone rectangulaire, par exemple, comme illustrée en figure 1, sans sortir du cadre de l'invention.

Comme le montre la figure 7, au voisinage de l'une des extrémités du bras 51, l'extrémité qui se situe sur le chariot 8 est reliée au châssis du chariot 8 par un ressort 57 travaillant en traction.

Le ressort 57 constitue des moyens de rappel élastiques du bras 51 dans une première position de détection.

L'extrémité du bras 51, côté ressort 57, repose sur une butée 58 qui est fixe par rapport au chariot 8.

L'autre extrémité du bras 51, qui pivote au-dessus du convoyeur 2 de sortie, constitue une sorte de palpeur contre lequel les articles convoyés peuvent exercer une pression. En exerçant une pression sur le bras 51, les articles déplacent le bras 51 dans la zone surveillée ZS.

La présence ou l'absence d'articles dans la zone ZS est remarquable par la position prise par le bras 51 sur le convoyeur 2 de sortie, dans la zone surveillée ZS.

Cette position est calculée par un télémètre 55 qui constitue un capteur apte à déterminer la position du bras 51 sur le convoyeur 2 de sortie, lequel bras comporte un réflecteur 56.

Le télémètre 55 est disposé de façon avantageuse à l'extrémité de la table, comme le montrent les figures 6 et 7.

Le réflecteur 56 offre l'avantage de permettre le retour d'un faisceau lumineux vers le télémètre 55, indépendamment de la couleur des bouteilles.

En effet, certaines bouteilles présentent des couleurs qui ne renvoient pas le faisceau lumineux émis par le télémètre. D'autres encore sont réalisées dans des matériaux qui ne renvoient pas non plus le faisceau lumineux émis par le télémètre.

Il suffit ainsi de choisir la couleur du réflecteur 56 en fonction du faisceau émis par le télémètre 55 pour que les moyens de détection fonctionnent indépendamment de la couleur des articles convoyés.

En fonction de la position du réflecteur 56 dans la zone surveillée ZS, le télémètre génère une information (illustrée par des flèches) qu'il transmet à des moyens d'analyse qui vont maintenant être décrits.

Les moyens d'analyse sont associés à un calculateur 59 qui est fixé à la table.

Le calculateur 59 n'a pas été représenté fixé sur la table pour simplifier la lecture de la figure 6.

Le calculateur 59 est apte à commander le fonctionnement du moteur 9, pour modifier la position du chariot 8 sur la table, en fonction de l'information qu'il reçoit du télémètre 55.

Le fonctionnement du moteur 9 entraîne un déplacement du chariot 8 dans un sens ou dans l'autre sur la table, de sorte à augmenter ou à diminuer la zone de transit des articles convoyés sur la table.

Le calculateur 59 commande le fonctionnement du moteur 9 en comparant l'information (qu'il reçoit du télémètre 55) à une autre information (illustrée par les flèches sur la figure 6) qui lui est transmise par un autre capteur 61.

Le capteur 61 est un générateur d'impulsion qui est fixé sur l'axe du moteur 9. Ce générateur d'impulsion permet de transmettre en permanence au calculateur 59 la position du chariot 8 sur la table.

Plus précisément, le générateur d'impulsions 61 donne une indication géographique d'une position 62 de référence, la position 62 de référence étant située dans la zone surveillée ZS.

Dans le cadre du mode de réalisation illustré en figures 6 et 7, la position de référence 62 est constituée par une ligne qui passe par l'axe 54 et qui est perpendiculaire à l'axe longitudinal de la table, c'est-à-dire l'axe de déplacement du chariot 8. Cette ligne est constituée par la bissectrice de l'angle maximum balayé par le bras 51, la position de référence étant située à mi-distance entre les deux positions extrêmes 52 et 53 que peut prendre le bras 51.

Les informations données par le télémètre 55 et par le générateur d'impulsions 61 sont comparées par le calculateur 59, de manière à obtenir un résultat.

Ce résultat donne une information sur la position du réflecteur 56 par rapport à la position de référence matérialisée par la ligne 62.

Le calculateur 59 comporte en mémoire deux valeurs (une valeur minimum et une valeur maximum) correspondant respectivement à deux positions situées de part et d'autre de la position de référence matérialisée par la ligne 62.

Le calculateur 59 analyse le résultat au regard des deux valeurs qu'il possède en mémoire.

Le résultat obtenu par le calculateur 59 doit être compris entre ces deux valeurs pour qu'aucune information ne soit adressée au moteur 9 du chariot 8. Autrement dit, si le résultat est compris entre les deux valeurs pré-enregistrées dans le calculateur 59, le chariot 8 ne bouge pas sur la table.

En revanche, si le résultat est supérieur à la valeur maximum ou inférieur à la valeur minimum, alors le calculateur 59 adresse aux moyens de déplacement (moteur 9) un ordre de déplacement, pour déplacer le chariot 8 dans un sens ou dans l'autre.

C'est ainsi que si la table est trop chargée en articles, ces derniers poussent suffisamment le bras 51 pour que celui-ci atteigne une position capable de déclencher un ordre de déplacement du chariot 8.

Parallèlement, s'il n'y a aucun article sur la table, ou trop peu, le bras 51 s'oriente vers une position extrême de la zone de surveillance, ce qui déclenche le mouvement du chariot 8.

On comprend de la description qui précède comment la table équipée d'un système de commande tel que décrit ci-dessus permet de déplacer automatiquement le chariot 8 dès que le système détecte une trop grande quantité d'articles ou trop peu d'articles dans une zone surveillée, en aval de l'organe déflecteur.

Il devra être compris que l'invention n'est pas limitée à ce mode de réalisation, et qu'elle concerne toute table équipée de moyens équivalents à ceux décrits ci-dessus, dans la limite de l'étendue de la protection conférée par les revendications.

## Revendications

1. Table plane d'accumulation d'articles pour une installation de convoyage du type comprenant, installés sur un bâti (17) :
- deux convoyeurs (1, 2) plans parallèles qui sont placés côte à côte et qui sont animés dans des sens opposés pour faire circuler longitudinalement lesdits articles, l'un des convoyeurs constituant un convoyeur (1) d'entrée des articles et l'autre convoyeur constituant un convoyeur (2) de sortie des articles, l'un et l'autre de ces convoyeurs constituant, en fonction des besoins, une zone de transit et d'accumulation desdits articles dont la surface d'accueil est variable.
- un organe déflecteur (11) qui est mobile longitudinalement et qui transfère lesdits articles disposés sur ledit convoyeur (1) d'entrée vers ledit convoyeur (2) de sortie,
ledit organe déflecteur (11) se présentant sous la forme d'une paroi (11) qui s'étend sensiblement sur toute la largeur du convoyeur (1) d'entrée, entre une glissière (3) latérale servant de guide pour les articles disposés sur ledit (1) convoyeur d'entrée, et une structure (7) disposée entre lesdits deux convoyeurs (1, 2), laquelle paroi (11) est portée par un chariot (8) qui est solidaire de ladite structure (7), laquelle structure (7) est mobile longitudinalement, la table étant **caractérisée en ce que** la paroi est une paroi courbe,
**en ce que** la table comporte une zone (ZI) d'introduction d'articles sur ledit convoyeur (2) de sortie, ladite zone (ZI) d'introduction étant disposée hors de ladite zone de transit.
**en ce que** la table comprend un système de commande de moyens (9) de déplacement dudit organe déflecteur (11), ledit système comportant :
des moyens (50) de détection de la présence ou de l'absence d'articles en place au voisinage d'une zone surveillée (ZS) qui se situe à l'extrémité aval (15) de l'organe déflecteur (11), sur le convoyeur de sortie (2), et
des moyens (59) d'analyse d'informations sur le taux d'occupation de ladite zone (ZS), lesquelles informations sont fournies par lesdits moyens (50) de détection aux moyens (59) d'analyse, lesdits moyens (59) d'analyse étant associés à un calculateur (59) qui commande les moyens (9) de déplacement de l'organe déflecteur (11), pour modifier la position dudit organe déflecteur (11) dans l'une desdites directions ou dans l'autre, selon le taux d'occupation de ladite zone surveillée (ZS) et suivant que les moyens de détection atteignent ou dépassent une première ou une seconde position, lesdites première et seconde positions étant situées de part et d'autre d'une position de référence (62) et étant comprises dans ladite zone surveillée (ZS).

2. Table selon la revendication 1, **caractérisée en ce que** les moyens de détection sont mobiles entre deux positions extrêmes (52, 53) délimitant ladite zone surveillée (ZS), sous l'action d'une pression ou d'une absence de pression exercée par les articles passant du convoyeur (1) d'entrée vers le convoyeur (2) de sortie.

3. Table selon la revendication 2, **caractérisée en ce que** les moyens de détection (50) comprennent un palpeur réalisé par un bras (51) articulé sur l'organe déflecteur, ledit palpeur étant positionné de manière à être en contact avec les articles convoyés et à être mobile sous la pression desdits articles convoyés passant du convoyeur (1) d'entrée au convoyeur (2) de sortie, dans la zone surveillée (ZS).

4. Table selon la revendication 3, **caractérisée en ce qu'**elle comporte :
- un premier capteur (61) déterminant la position de l'organe déflecteur sur la table,
- un second capteur (55) déterminant la position dudit palpeur sur la table,
- et un calculateur (59) relié aux premier et second capteurs (61 ; 55) de positions, ledit calculateur (59) étant apte à comparer des données fournies par lesdits premier et second capteurs (61, 55) pour commander les moyens (9) de déplacement de l'organe déflecteur.

5. Table selon la revendication 4, **caractérisée en ce que** le capteur de position dudit palpeur est un télémètre (55) et **en ce que** le palpeur porte un réflecteur (56).

6. Table selon l'une quelconque des revendications 3 à 5, **caractérisée en ce que** les moyens de détection (50) comportent des moyens (57) de rappel élastique du bras (51) dans une première position de détection.

7. Table d'accumulation selon l'une quelconque des revendications 1 à 6, **caractérisée en ce qu'**elle comporte une cloison (31) de séparation qui s'étend entre les deux convoyeurs (1, 2) et qui laisse un passage (32) de longueur constante, en amont de l'extrémité de la paroi (11) pour le transfert des articles du convoyeur (1) d'entrée vers le convoyeur (2) de sortie.

8. Table d'accumulation selon la revendication 7, **caractérisée en ce que** le passage (32) présente une longueur qui est comprise sensiblement entre une fois et une fois et demie la largeur du convoyeur (1) d'entrée.

9. Table d'accumulation selon la revendication 7 ou 8, **caractérisée en ce que** la structure (7) se présente sous la forme d'une chaîne sans fin motorisée et elle est aménagée, notamment au niveau du passage (32) pour faire office de tapis (29) intermédiaire entre les deux convoyeurs (1, 2), sur une longueur qui correspond au moins à la longueur dudit passage (32).

10. Table d'accumulation selon la revendication 9, **caractérisée en ce que** la cloison (31) de séparation est constituée de pièces (33) élémentaires qui sont portées par le tapis (29), lesquelles pièces (33) élémentaires s'étendent sur une longueur qui correspond à la zone de transit.

11. Table d'accumulation selon l'une quelconque des revendications 1 à 10, **caractérisée en ce que** le chariot (8) comprend :
- un côté (12) latéral guidé sur la glissière (3) du convoyeur (1) d'entrée,
- un côté (13) transversal qui s'étend sensiblement perpendiculairement à ladite glissière (3) jusqu'à ladite structure (7) sur laquelle il est fixé,
- une paroi (11) courbe qui présente une extrémité (14) amont tangente à ladite glissière (3) et une extrémité (15) aval qui fait un angle avec ledit côté (13) transversal au moins supérieur ou égal à 10°.

12. Table d'accumulation selon la revendication 11, **caractérisée en ce que** le côté (12) latéral du chariot (8) comporte :
- une extrémité amont constituée d'une pièce monobloc en forme de coulisseau (16) à section en C qui coulisse sur la glissière (3), ladite extrémité amont servant de départ pour la paroi (11) courbe, et
- des galets (28) répartis sur le côté (12) latéral, lesquels galets (28) sont disposés de façon à rouler de part et d'autre de la glissière (3).

13. Table d'accumulation selon la revendication 12, **caractérisée en ce que** la glissière (3) comprend une âme (18) métallique solidaire du bâti (17) et un profilé (22) en matériau thermoplastique, lequel profilé (22) couvre totalement ladite âme (18) du côté du convoyeur (1) et partiellement de l'autre côté.

14. Table d'accumulation selon l'une quelconque des revendications précédentes, **caractérisée en ce qu'**elle comporte un second organe déflecteur (36) apte à diriger les articles qui sont positionnés sur le convoyeur (2) de sortie vers un autre convoyeur (37).

15. Table d'accumulation selon la revendication 14 combinée à la revendication 2, **caractérisée en ce que** le second organe déflecteur (36) comporte, à son extrémité amont, un volet (40) incliné, disposé à un niveau qui s'étend au-dessus de la cloison (31), ledit volet (40) étant apte à ramener les articles vers le convoyeur (2) de sortie, lors de la vidange de ladite table d'accumulation.

16. Procédé de mise en oeuvre du système de commande de la table selon la revendication 4, **caractérisé en ce qu'**il comporte les étapes suivantes :
- transmission, par le premier capteur (61) de position au calculateur (59), d'une première information concernant la position de l'organe déflecteur (11) sur la table,
- transmission, par le second capteur (55) de position au calculateur (59), d'une seconde Information concernant la position du palpeur sur la table,
- comparaison, par le calculateur (59), desdites première et seconde informations, de manière à obtenir un résultat,
- analyse dudit résultat, et
- transmission, par le calculateur (59) aux moyens (9) de déplacement de l'organe déflecteur (11), d'un ordre de déplacement dudit organe déflecteur (11) dans une direction ou dans une autre, si le résultat indique que le palpeur a atteint l'une ou l'autre desdites positions de déclenchement d'un côté ou de l'autre de ladite position de référence.

## Patentansprüche

1. Ebener Tisch zum Sammeln von Waren für eine Förderanlage, umfassend auf einem Gestell (17) angeordnet:
- zwei ebene parallele Förderbänder (1, 2), die nebeneinander angeordnet sind und in entgegengesetzte Richtungen angetrieben werden, um die Waren in Längsrichtung umlaufen zu lassen, wobei eines der Förderbänder ein Eingangsförderband (1) der Waren und das andere Förderband ein Ausgangsförderband (2) der Waren darstellt, wobei das eine und das andere dieser Förderbänder je nach Bedarf eine Übergangs- und Sammelzone für die Waren darstellen, deren Aufnahmefläche variabel ist,
- ein Ablenkelement (11), das längs beweglich ist und die auf dem Eingangsförderband (1) angeordneten Waren zu dem Ausgangsförderband (2) weiterleitet, wobei das Ablenkelement (11) in Form einer Wand (11) vorhanden ist, die sich im Wesentlichen über die gesamte Breite des Eingangsförderbandes (1) zwischen einer seitlichen Gleitschiene (3), die als Führung für die auf dem Eingangsförderband (1) angeordneten Waren dient, und einer Struktur (7) erstreckt, die zwischen den beiden Förderbändern (1, 2) angeordnet ist, wobei die Wand (11) von einem Wagen (8) getragen wird, der mit der Struktur (7) verbunden ist, wobei die Struktur (7) längs beweglich ist,
wobei der Tisch **dadurch gekennzeichnet ist, dass** die Wand eine gebogene Wand ist,
dass der Tisch eine Zone (ZI) zum Einführen der Waren auf das Ausgangsförderband (2) umfasst, wobei die Einführungszone (ZI) außerhalb der Übergangszone angeordnet ist,
dass der Tisch ein System zur Steuerung von Mitteln (9) zur Verschiebung des Ablenkelements (11) umfasst, wobei das System Folgendes umfasst:
Mittel (50) zur Erfassung des Vorhandenseins oder Nichtvorhandenseins von aufgelegten Waren in der Nähe einer Überwachungszone (ZS), die sich am stromabwärtigen Ende (15) des Ablenkelements (11) auf dem Ausgangsförderband (2) befindet und
Mittel (59) zur Analyse von Informationen über die Belegungsrate der Zone (ZS), wobei die Informationen von den Erfassungsmitteln (50) an die Analysemittel (59) geliefert werden, wobei die Analysemittel (59) mit einem Rechner (59) verbunden sind, der die Mittel (9) zur Verschiebung des Ablenkelements (11) steuert, um die Position des Ablenkelements (11) in eine der Richtungen oder in die andere zu verändern, und zwar je nach Belegungsrate der Überwachungszone (ZS) und je nachdem, ob die Erfassungsmittel eine erste oder eine zweite Position erreichen oder überschreiten, wobei die erste und die zweite Position beiderseits einer Referenzposition (62) angeordnet und in der Überwachungszone (ZS) enthalten sind.

2. Tisch nach Anspruch 1, **dadurch gekennzeichnet, dass** die Erfassungsmittel zwischen zwei äußersten Positionen (52, 53), die die Überwachungszone (ZS) begrenzen, unter der Wirkung eines Drucks oder eines fehlenden Drucks, der von den Waren ausgeübt wird, die vom Eingangsförderband (1) zum Ausgangsförderband (2) übergehen, beweglich sind.

3. Tisch nach Anspruch 2, **dadurch gekennzeichnet, dass** die Erfassungsmittel (50) einen Fühler umfassen, der von einem Arm (51) gebildet ist, der an dem Ablenkelement angelenkt ist, wobei der Fühler derart positioniert ist, dass er mit den beförderten Waren in Kontakt ist und unter dem Druck der beförderten Waren, die vom Eingangsförderband (1) zum Ausgangsförderband (2) übergehen, in der Überwachungszone (ZS) beweglich ist.

4. Tisch nach Anspruch 3, **dadurch gekennzeichnet, dass** er Folgendes umfasst:
- einen ersten Sensor (61), der die Position des Ablenkelements auf dem Tisch bestimmt,
- einen zweiten Sensor (55), der die Position des Fühlers auf dem Tisch bestimmt,
- und einen Rechner (59), der mit dem ersten und dem zweiten Positionssensor (61; 55) verbunden ist, wobei der Rechner (59) geeignet ist, Daten, die von den ersten und zweiten Sensoren (61, 55) geliefert werden, zu vergleichen, um die Verschiebemittel (9) des Ablenkelements zu steuern.

5. Tisch nach Anspruch 4, **dadurch gekennzeichnet, dass** der Positionssensor des Fühlers ein Telemeter (55) ist, und dass der Fühler einen Reflektor (56) trägt.

6. Tisch nach einem der Ansprüche 3 bis 5, **dadurch gekennzeichnet, dass** die Erfassungsmittel (50) elastische Rückstellmittel (57) für den Arm (51) in eine erste Erfassungsposition umfassen.

7. Sammeltisch nach einem der Ansprüche 1 bis 6, **dadurch gekennzeichnet, dass** er eine Trennwand (31) umfasst, die sich zwischen den beiden Förderbändern (1, 2) erstreckt und einen Durchgang (32) von konstanter Länge stromaufwärts zum Ende der Wand (11) für die Weiterleitung der Waren vom Eingangsförderband (1) zum Ausgangsförderband (2) freilässt.

8. Sammeltisch nach Anspruch 7, **dadurch gekennzeichnet, dass** der Durchgang (32) eine Länge aufweist, die im Wesentlichen zwischen einmal und eineinhalbmal die Breite des Eingangsförderbandes (1) ausmacht.

9. Sammeltisch nach Anspruch 7 oder 8, **dadurch gekennzeichnet, dass** die Struktur (7) in Form einer motorisierten Endloskette vorhanden ist und insbesondere im Bereich des Durchgangs (32) angeordnet ist, um als Zwischenförderband (29) zwischen den beiden Förderbändern (1, 2) auf einer Länge zu dienen, die mindestens der Länge des Durchgangs (32) entspricht.

10. Sammeltisch nach Anspruch 9, **dadurch gekennzeichnet, dass** die Trennwand (31) von elementaren Teilen (33) gebildet ist, die von dem Förderband (29) getragen werden, wobei sich die elementaren Teile (33) auf einer Länge erstrecken, die der Übergangszone entspricht.

11. Sammeltisch nach einem der Ansprüche 1 bis 10, **dadurch gekennzeichnet, dass** der Wagen (8) Folgendes umfasst:
- eine Seitenfläche (12), die auf der Gleitschiene (3) des Eingangsförderbandes (1) geführt wird,
- eine Querseite (13), die sich im Wesentlichen senkrecht auf die Gleitschiene (3) bis zu der Struktur (7), auf der sie befestigt ist, erstreckt,
- eine gebogene Wand (11), die ein stromaufwärtiges Ende (14), das die Gleitschiene (3) tangiert, und ein stromabwärtiges Ende (15), das einen Winkel mit der Querseite (13) mindestens größer oder gleich 10° bildet, aufweist.

12. Sammeltisch nach Anspruch 11, **dadurch gekennzeichnet, dass** die Seitenfläche (12) des Wagens (8) Folgendes umfasst:
- ein stromaufwärtiges Ende, das von einem einstückigen Teil in Form eines Gleitschiebers (16) mit C-förmigem Querschnitt gebildet ist, der auf der Gleitschiene (3) gleitet, wobei das stromaufwärtige Ende als Ausgangspunkt für die gebogene Wand (11) dient, und
- Rollen (28), die auf der Seitenfläche (12) verteilt sind, wobei die Rollen (28) derart angeordnet sind, dass sie beiderseits der Gleitschiene (3) rollen.

13. Sammeltisch nach Anspruch 12, **dadurch gekennzeichnet, dass** die Gleitschiene (3) einen metallischen Kern (18), der mit dem Gestell (17) verbunden ist, und ein Profil (22) aus Thermoplast umfasst, wobei das Profil (22) den Kern (18) auf der Seite des Förderbandes (1) zur Gänze und auf der anderen Seite teilweise abdeckt.

14. Sammeltisch nach einem der vorhergehenden Ansprüche, **dadurch gekennzeichnet, dass** er ein zweites Ablenkelement (36) umfasst, das geeignet ist, die Waren, die auf dem Ausgangsförderband (2) positioniert sind, zu einem anderen Förderband (37) zu lenken.

15. Sammeltisch nach Anspruch 14 in Kombination mit Anspruch 2, **dadurch gekennzeichnet, dass** das zweite Ablenkelement (36) an seinem stromaufwärtigen Ende eine geneigte Klappe (40) umfasst, die auf einem Niveau angeordnet ist, das sich über der Trennwand (31) erstreckt, wobei die Klappe (40) geeignet ist, die Waren beim Leeren des Sammeltisches zum Ausgangsförderband (2) zurückzuleiten.

16. Verfahren für den Einsatz des Steuersystems des Tisches nach Anspruch 4, **dadurch gekennzeichnet, dass** es die folgenden Schritte umfasst:
- durch den ersten Positionssensor (61) Übertragung einer ersten Information über die Position des Ablenkelements (11) auf dem Tisch an den Rechner (59),
- durch den zweiten Positionssensor (55) Übertragung einer zweiten Information über die Position des Fühlers auf dem Tisch an den Rechner (59),
- Vergleich der ersten und zweiten Informationen durch den Rechner (59), um ein Ergebnis zu erhalten,
- Analyse des Ergebnisses, und
- durch den Rechner (59) Übertragung an die Verschiebemittel (9) des Ablenkelements (11) eines Verschiebebefehls des Ablenkelements (11) in die eine oder andere Richtung, wenn das Ergebnis zeigt, dass der Fühler die eine oder die andere der Auslösepositionen auf der einen oder der anderen Seite der Referenzposition erreicht hat.

## Claims

1. A plane item accumulation table for a conveyor installation of the type comprising, installed on a frame (17):
- two parallel plane conveyors (1, 2) that are placed side by side and that are driven in opposite directions to cause said articles to circulate longitudinally, one of the conveyors constituting an article entry conveyor (1) and the other conveyor constituting an article exit conveyor (2), both these conveyors constituting, as a function of requirements, a transit area for accumulation of said articles the receiving area of which is variable,
- a deflector member (11) that is mobile longitudinally and that transfers said articles disposed on said entry conveyor (1) toward said exit conveyor (2), said deflector member (11) taking the form of a wall (11) that extends over substantially all of the width of the entry conveyor (1), between a lateral slide (3) serving as a guide for the articles disposed on said entry conveyor (1) and a structure (7) disposed between said two conveyors (1, 2), which wall (11) is carried by a carriage (8) that is fastened to said structure (7), which structure (7) is mobile longitudinally,
said table being **characterized in that** said wall is a curved wall ,
**in that** the table includes an area (ZI) for introduction of articles onto said exit conveyor (2), said introduction area (ZI) being disposed outside said transit area,
and **in that** the table comprises a control system for means (9) for moving said deflector member (11), said system including:
means (50) for detecting the presence or the absence of articles in place in the vicinity of a surveillance area (ZS) that is situated at the downstream end (15) of the deflector member (11) on the exit conveyor (2), and
means (59) for analyzing information on the occupancy of said area (ZS), which information is supplied by said detection means (50) to the analysis means (59), said analysis means (59) being associated with a computer (59) that controls the means (9) for moving the deflector member (11) to modify the position of said deflector member (11) in one of said directions or the other, according to the occupancy of said surveillance area (ZS) and depending on whether the detection means reach or overshoot a first or a second position, said first and second positions being situated on respective opposite sides of a reference position (62) and being included within said surveillance area (ZS).

2. The table as claimed in claim 1, **characterized in that** the detection means are mobile between two extreme positions (52, 53) delimiting said surveillance area (ZS), by a pressure or by an absence of pressure exerted by the articles passing from the entry conveyor (1) toward the exit conveyor (2).

3. The table as claimed in claim 2, **characterized in that** the detection means (50) comprise a feeler in the form of an arm (51) articulated to the deflector member, said feeler being positioned so as to be in contact with the conveyed articles and to be mobile as a result of the pressure of said conveyed articles passing from the entry conveyor (1) to the exit conveyor (2) in the surveillance area (ZS).

4. The table as claimed in claim 3, **characterized in that** it includes:
- a first sensor (61) determining the position of the deflector member on the table,
- a second sensor (55) determining the position of said feeler on the table, and
- a computer (59) connected to the first and second position sensors (61; 55), said computer (59) being adapted to compare data supplied by said first and second sensors (61, 55) to control the means (9) for moving the deflector member.

5. The table as claimed in claim 4, **characterized in that** the feeler position sensor is a rangefinder (55) and **in that** the feeler carries a reflector (56).

6. The table as claimed in any one of claims 3 to 5, **characterized in that** the detection means (50) include means (57) for spring-loading the arm (51) into a first detection position.

7. The accumulation table as claimed in any one of claims 1 to 6, **characterized in that** it includes a separator partition (31) that extends between the two conveyors (1, 2) and leaves a passage (32) of constant length upstream of the end of the wall (11) for the transfer of articles from the entry conveyor (1) toward the exit conveyor (2).

8. The accumulation table as claimed in claim 7, **characterized in that** the passage (32) has a length between substantially once and one and a half times the width of the entry conveyor (1).

9. The accumulation table as claimed in claim 7 or claim 8, **characterized in that** the structure (7) takes the form of an endless chain that is motorized and adapted, notably at the level of the passage (32), to serve as an intermediate belt (29) between the two conveyors (1, 2), over a length that corresponds at least to the length of said passage (32).

10. The accumulation table as claimed in claim 9, **characterized in that** the separator partition (31) is constituted of individual parts (33) that are carried by the belt (29), which individual parts (33) extend over a length that corresponds to the transit area.

11. The accumulation table as claimed in any one of claims 1 to 10, **characterized in that** the carriage (8) comprises:
- a lateral side (12) guided on the slide (3) of the entry conveyor (1),
- a transverse side (13) that extends substantially perpendicularly to said slide (3) as far as said structure (7) to which it is fixed,
- a curved wall (11) that has an upstream end (14) tangential to said slide (3) and a downstream end (15) at an angle to said transverse side (13) greater than or equal to 10°.

12. The accumulation table as claimed in claim 11, **characterized in that** the lateral side (12) of the carriage (8) includes:
- an upstream end constituted of a one-piece C-section slider (16) that slides on the slide (3), said upstream end serving as a point of departure for the curved wall (11), and
- rollers (28) distributed on the lateral side (12), which rollers (28) are disposed so as to roll on respective opposite sides of the slide (3).

13. The accumulation table as claimed in claim 12, **characterized in that** the slide (3) comprises a metal core (18) fastened to the frame (17) and a thermoplastic material structural section (22), which structural section (22) covers said core (18) completely on the conveyor side (1) and partly on the other side.

14. The accumulation table as claimed in any one of the preceding claims, **characterized in that** it includes a second deflector member (36) adapted to direct the articles that are positioned on the exit conveyor (2) toward another conveyor (37).

15. The accumulation table as claimed in claim 14 combined with claim 2, **characterized in that** the second deflector member (36) includes at its upstream end an inclined flap (40) disposed at a level that extends above the partition (31), said flap (40) being adapted to move the articles toward the exit conveyor (2) when emptying said accumulation table.

16. A method of using a control system of the table as claimed in claim 4, **characterized in that** it includes the following steps:
- the first position sensor (61) sending the computer (59) first information concerning the position of the deflector member (11) on the table,
- the second position sensor (55) sending the computer (59) second information concerning the position of the feeler on the table,
- the computer (59) comparing said first and second information to obtain a result,
- analyzing said result, and
- the computer (59) sending the means (9) for moving the deflector member (11) an instruction for movement of said deflector member (11) in one direction or another if the result indicates that the feeler has reached either of said triggering positions on one side or the other of said reference position.
